# EUROPEAN PATENT APPLICATION

(11) **EP 3 477 527 A1**
(43) Date of publication of application: **01.05.2019**
(21) Application number: 17306508.7
(22) Date of filing: 31.10.2017
(51) Int. Cl.: G06F 21/62, H04L 29/06

(54) **PRIVACY MANAGEMENT**

(71) Applicant: Twinpeek, 38410 Saint-Martin-d'Uriage (FR)
(72) Inventor: GUILAUME, Sam, 38410 SAINT-MARTIN-D'URIAGE (FR); SOUBEYRAT, Cyrille, 38140 REAUMONT (FR)
(74) Representative: Nguyen-Van-Yen, Christian

(57) **Abstract**

There is disclosed a computer-implemented method of privacy management. A core dataset comprising user personal identifiable data can be kept separated from some other data silos associated with said core dataset by a software program. Said program can be a smart contract implemented on a crypto-ledger. Personal identifiable data can comprise true identity information and/or Know Your Customer data compliant with banking regulation. Data silos can comprise anonymous and/or anonymized and/or pseudonymized and/or de-identified data. Data silos can be actively partitioned into a plurality of datasets associated with discrete levels of privacy breach risks. The partitioning between datasets can use one or more mechanisms comprising in particular multi-party computation, homomorphic encryption, k-anonymity, or differential privacy. Asymmetric encryption can be used, along format-preserving encryption. Software and system aspects are described.

## Description

### Technical Field

This patent relates to the field of data processing and more particularly to methods and systems for managing privacy (e.g. digital identity).

### Background

Mass surveillance and privacy have become major concerns for the general public. Advertising also requires more and more data regarding potential consumers.

Online privacy designates the ability of an individual, or of a group, to seclude information about them. For online privacy protection, an important aspect thereof lies in the concept of "identity".

Few techniques aiming at protecting digital identities reveal to be efficient trade-offs. Some techniques for securing data are efficient but impede or prevent useful personalization of advertising. No existing technologies allow for balanced or fair revenue models (information technology providers do not remunerate users for their data).

There is a need for advanced methods and systems for managing digital identities, with improved trade-offs between utility, privacy and revenue.

### Summary

There is disclosed a method of privacy management. A core dataset comprising user personal identifiable data can be kept separated from some other data silos associated with said core dataset by a software program. Said program can be a smart contract implemented on a crypto-ledger. Personal identifiable data can comprise true identity information and/or Know Your Customer data compliant with banking regulation. Data silos can comprise anonymous and/or anonymized and/or pseudonymized and/or de-identified data. Data silos can be actively partitioned into a plurality of datasets associated with discrete levels of privacy breach risks. The partitioning between datasets can use one or more mechanisms comprising in particular multi-party computation, homomorphic encryption, k-anonymity, or differential privacy. Asymmetric encryption can be used, along format-preserving encryption. Software and system aspects are described.

Embodiments of the invention advantageously allow users to control access and/or usage of their data, and in particular can allow privacy management, with fine-tuned granularity.

Embodiments of the invention advantageously can be compliant with existing or foreseeable regulations (e.g. European privacy regulation, banking regulations, etc).

Embodiments of the invention advantageously can allow the sharing of revenues between service providers and end users, deeply modifying existing business practices.

Embodiments of the invention advantageously can allow service providers to handle and process digital assets, consolidating anonymous data and data associated with true digital identities. Service providers can process and enrich collected data (e.g. extract patterns, performs big data correlations, etc), so as to create data packages which can be later sold or licensed, many times, with transparency i.e. under the control of users and with revenue sharing.

### Brief description of drawings

Embodiments of the present invention will now be described by way of example with reference to the accompanying drawings in which like references denote similar elements, and in which:
FIG. 1 provides a general overview of the framework of the invention;
FIG. 2 illustrates an embodiment of the invention;
FIG. 3 shows an example of privacy management according to an embodiment of the invention;
FIG. 4 shows an embodiment of the invention with emphasis on the management of encryption keys;
FIG. 5 shows examples of steps of an embodiment of the invention;
FIG. 6 and 7 show examples of user interfaces of a web browser for privacy management.

### Detailed description

Definitions of terms and expressions are now provided.

The expression "personal data" refers to any information relating to an identified or identifiable natural person ("data subject" or "user"). An identifiable natural person is one who can be identified, directly or indirectly, in particular by reference to an identifier such as a name, an identification number, location data, an online identifier or to one or more factors specific to the physical, physiological, genetic, mental, economic, cultural or social identity of that natural person. For example, information such as an online identifier or an IP address can be personal data. Personal data encompasses human resources' records, customer lists, contact details etc.

The expression "personally identifiable information" or "sensitive personal information" or "personal identifiable data" designates information that can be used on its own or with other information to identify, contact, or locate a single person, or to identify an individual in context. The National Institute of Standards and Technology has defined "personally identifiable information" as *"any information about an individual maintained by an agency, including (1) any information that can be used to distinguish or trace an individual's identity, such* as *name, social security number, date and place of birth, mother's maiden name, or biometric records; and (2) any other information that is linked or linkable to an individual, such* as *medical, educational, financial, and employment information."* The expression "personally identifiable information" is thus not strictly equivalent to the expression ""personally identifying information", in that the term "identifiable" underlines the possibility of identification. Embodiments of the invention can apply to "personally identifying information" but also to "personally identifiable information" (which is broader).

The association is more or less direct between data and an identified/identifiable individual. For example, a user's IP address is generally not considered as *"personally identifiable information"* on its own, but can be classified as *"linked personally identifiable information".* Some data can indirectly lead to a given individual; for example *stylometry* (e.g. statistics, individual habits of words' collocation, etc) can be used to attribute authorship to anonymous or disputed documents.

In some embodiments of the invention, "personal identifiable data" or "personally identifiable data" designate data which is associated *"directly"* with an individual, along data which can *indirectly* lead to an individual (according to different degrees of association).

In lay language, data can be partitioned into "black" data (i.e. data *directly* leading to individual identification), "grey" data (i.e. data which can potentially or *indirectly* lead to reveal the identity of an individual) and white data (i.e. generic data, not linked or linkable with a given individual), Some embodiments of the invention can manipulate i.e. secure "black" data kept separated from the rest of the data ("grey" data and "white" data). In some other embodiments, the "grey" zone can be secured and manipulated along (in addition to) the "black zone".

The verb "to process" designates any operation or set of operations which is performed on personal data, whether or not by automated means, such as collection, recording, organization, structuring, storage, adaptation or alteration, retrieval, consultation, use, disclosure by transmission, publication, dissemination or otherwise making available, alignment or combination, aggregation, restriction, erasure, deletion or destruction.

The term a "processor" designates a person, group of persons, organization, machines or groups of machines which process personal data.

A "controller" designates a natural or legal person, public authority, agency or other body which, alone or jointly with others, determines the purposes and means of the processing of personal data. A controller can be embodied in software executed in hardware (e.g. a computer executing rules). The underlying purposes and means of data processing can be determined by applicable law ("legal or regulatory purposes"). Further purposes and means aligned with underlying purposes can be manipulated by embodiments of the invention.

The term "anonymization" refers to irreversibly severing or altering a dataset from the identity of a data contributor to prevent any future re-identification, under any condition. Data anonymization designates a type of information sanitization to protect privacy. Data anonymization can be achieved by encrypting and/or removing personally identifiable information from datasets, so that the people whom the data describe remain or can remain anonymous. Encryption and/or anonymization can be short-term secure but not long-term secure. In some embodiments, anonymization is rather a continuous process, wherein privacy breaches can be assessed over time, and further mitigated (e.g. with countermeasures). In particular, as data about an individual is collected, the risk of a possible (re)identification can increase (e.g. by correlation, or due to the fact that one single data or data field which can compromise whole datasets).

The term "de-identification" designates a severing of a dataset from the identity of a data contributor, but may include preserving identifying information, which could be re-linked in certain situations (for example by a trusted party). De-identification thus designates the process used to prevent a person's identity from being connected with information. Common strategies for de-identifying datasets include deleting or masking personal identifiers, such as name and social security number, and suppressing or generalizing quasi-identifiers, such as date of birth and zip code. The reverse process of defeating de-identification to identify individuals is known as re-identification. In some embodiments of the invention, such re-identification can be tested (i.e. as a challenge to allow or refuse communication of data, or to partition data sets). Some de-identification techniques may indeed not be safe against near-term future re-identification methods.

The term "pseudonymization" ("pseudo", "pseudonym") is a procedure by which one or more identifying fields within a dataset are replaced by one or more artificial identifiers, or pseudonyms. The purpose of the procedure is to render the dataset less identifying and therefore to possibly lower user objections to its use. Pseudonymized data in this form can be suitable for extensive analytics and processing. Pseudonyms possess varying degrees of anonymity, ranging from *highly linkable public* pseudonyms (the link between the pseudonym and a human being is publicly known or easy to discover), *potentially linkable non-public* pseudonyms (the link is known to some parties but is not publicly disclosed), and *unlinkable* pseudonyms (the link is not known to parties and cannot be determined).

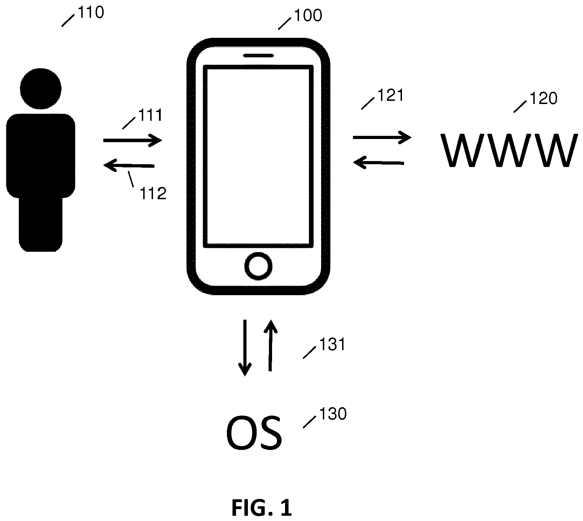

Figure 1 provides a general overview of the framework of the invention.

Figure 1 shows a computer 100 (e.g. smartphone, wearable computer, smart watch, connected home device, connected car device, etc) of a human user 110 (true user, i.e. associated or associatable with a true identity). By extension, the user 100 also can designate a group of users (privacy group policy). The computer 100 leaves footprints and trails on the Internet 120 (e.g. search engines, commerce websites), for example through cookies, bugs, trackers, and other mechanisms. Noticeably, the computer 100 can be the gateway to a collection of sensors and/or actuators. For example, the smartphone can process or otherwise have access to domotics or health sensors. The computer 100 executes an operating system 130.

Privacy leaks can occur via different communication channels. Information 111 can be intentionally - or not - provided by the user 110 to the computer 100 (initial data). Information 112 can be processed (e.g. inferred) by the computer 100 and sent back to the user 110, further confirmed or acknowledged by the user (processed data). Information 121 can be communicated from the computer 100 to the web 120, for example screen resolution, user agent, OS version, browser extensions, installed apps but also information which can be computed from said data e.g. fingerprinting profile or apps usage statistics. Information 121 can be given with some consent (confer P3P protocols). Information 121 also can be given without explicit prior consent of the user). Information 121 also can be stolen (e.g. hacks, exploits, eavesdropping, etc). The web 120 can return processed data about the user. Information 131 can be exchanged with the Operating System 130 (and more generally apps or software applications) executed on/by the computer 130.

In embodiments of the invention, countermeasures can be taken to control data flows (i.e. data leaks). Information (e.g. flows) 111 can be regulated by using monitoring watchdogs or daemons or filters, for example emitting warnings to the user before access to personal data and notifications afterwards. Information 112 can be regulated, for example by using filters executing "auto-censorship" rules (for example, the computer can suspend, hold, stop, or prevent the raise of intimate questions, e.g. in web forms or social networks). Information 121 can be regulated. For example, the computer can detect, filter out and retain data sent to the internet. The computer can send fake data, possibly flooding requesting machines. The computer can alter personal data or otherwise obfuscate it (e.g. use of TOR or onion routing techniques, use of proxies and/or VPNs, use of spoofing techniques, use of masking techniques by modifying headers, types of documents, response times and/or latencies, etc). The computer also can use technologies for information security (i.e. encryption, steganography, etc). From the web to the computer, received requests can cause the computer to proceed to proactive defense (i.e. detect, analyze, and anticipate attacks). Information 131 can be regulated or protected in different manners (e.g. sandboxing, secured boot, wired connections between the computer and the storage hardware which cannot logically be eavesdropped, etc).

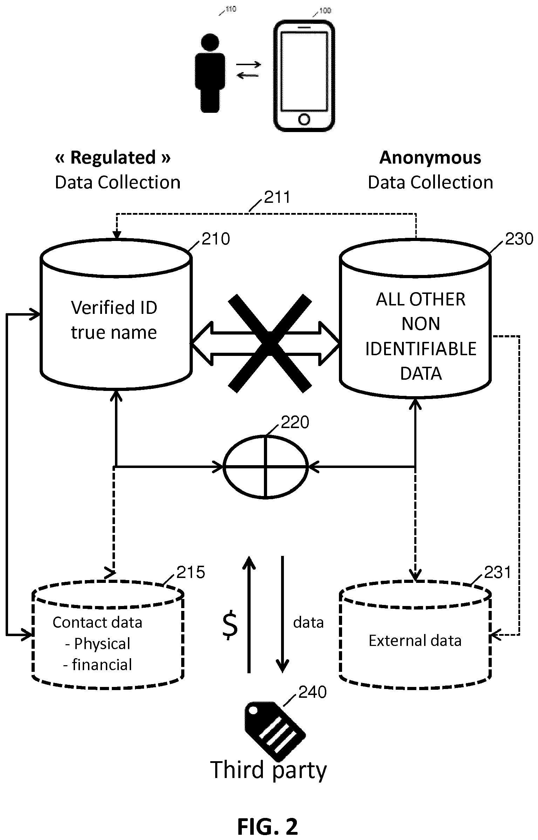

Figure 2 illustrates an embodiment of the invention.

FIG. 2 shows an embodiment of the invention, comprising *two* data collections 210 and 230. These data collections are linked or otherwise articulated by a program 220, for example a smart contract, which organizes data in response to requests of one or more third parties 240.

In some embodiments, a plurality of programs 220 e.g. of smart contracts can be executable and/or executed. The organization of data can be the result of a collective behavior, either as an emergent property (bottom-up) or by design (top-down), or according to intermediate schemes. Depending on embodiments, programs or smart contracts can be cooperative or not, competitive or not, convergent or divergent, synchronized or desynchronized, secured or not, formally proved or not, congruent or not, etc. In particular, in some embodiments, some programs may rule other programs (e.g. framework contract). Cascades of regulations thus can be implemented. In the following description, it will be referred to "a" or "one" program, but the term encompasses the implementation of a plurality of such software pieces (e.g. as services, agents, snippets, SOAs, APIs, add-ons, plug-in, extensions, DLCs, etc.

In some embodiments, a plurality N of data collections can be handled, with N superior or equal to 2. Data collections are mutually exclusive, i.e. are maintained as distinct and nonoverlapping data repositories or "silos".

Quantitatively, sizes of silos (amounts of information) can be diverse. For N=2, the data collection 210 may comprise a reduced amount of information (few data or data attributes or data fields), compared to the data collection 220 which can be large. Data collection 230 can be augmented or further enriched by cross-fertilization with external databases 231.

Different divisions of data between considered silos may be performed (or predefined).

In an embodiment ("Personal versus non-personal"), the data collection 210 comprises *personal data* (i.e. data which is "identifiable" or which can be associated with the true identity of a user, see the preceding definitions), while the data collection 230 comprises all other data. The data collection 230 comprises *non-personal* data, defined as data without the personal data in the data collection 210, or defined as data without any *direct* relationship with the personal data collection 210 (e.g. augmented data).

In an embodiment ("Biological"), the data collection 210 can comprise necessary and sufficient data to establish the "biological identity" of a user. According to the different embodiments of the invention, the biological identity can use one or more (i.e. in combination) of the following information: DNA (whole genome or particular sequences or SNPs single-nucleotide polymorphisms), biometric information (e.g. face, fingerprint, hand, handwriting, iris, retina, keystroke, vein, voice, gestures, and behavioral e.g. writing style), civil name and surnames. By contrast, the data collection 230 can comprise other data, while the data collection can comprise data required for a financial transaction.

In an embodiment ("Banking"), the data collection 210 comprises necessary and sufficient data to establish the "true identity" of a user. The expression "true identity" can refer to banking regulations, wherein an individual, to open a bank account, must provide proofs of civil (biological) identity, as well as an address (physical and/or logical contact details). The expression in particular implies that the true identity is *verified,* for example by civil servants or authorized representatives of a private organization. In such an embodiment an individual is associated with a true identity (or biological identity), a physical and/or logical address and a financial address. Noticeably, access to external databases 215 can provide further or full contact details provided there exists the necessary and sufficient link from the true identity dataset.

In an embodiment ("KYC"), the data collection 210 comprises "Know Your Customer" (KYC) data. KYC designates the process of a business, for example a bank, identifying and verifying the identity of its clients (by reference to bank regulations). Companies or banks shall ensure that their employees or business partners are anti-bribery compliant. KYC data thus designates a specific set of data, which implies a plurality of prior steps (due diligence policies, procedures, and controls).

In an embodiment, the data collection 210 can comprise *"true",* i.e. not falsified data, while the data collection 230 can comprise all the other (available) data. Such truth status can be binary (yes/verified or true; no/unverified or false or unknown). In some embodiments, discrete levels of trust or verifications (e.g. number of independent sources attesting data) can be associated with the plurality of silos. For example, one silo can be tagged "maximal trust", while another one can be flagged "generic data". Silos also can be ranked according to the number of verifications performed.

In some embodiments, the data collection 230 comprises data which is not in the data collection 210 and which is associable with the real user, directly (e.g. sensors, provided spontaneously) or indirectly (e.g. inferred, deduced, generated, etc).

In some embodiments, the data collection 230 may comprise anonymized data (information sanitization for privacy protection: removal of personally identifiable information in a manner that enables evaluation and analytics post-anonymization); e.g. removal of name and address together with any other information which, in conjunction with other data held by or disclosed to the recipient could identify the user (e.g. browser fingerprint).

In some embodiments, the data collection 230 can comprise data such as data spontaneously provided by the user (advertising preferences, ad-blocker preferences, etc); biological data (as captured by wearable computers, fitness bands, or other medical devices), including but not limited to gestures, emotion tracking and eye tracking; physical data (geolocation, speed, acceleration); domotics data (e.g. door fridges openings count, etc); automotive / car data (e.g. driving profile and style); personal intellectual productions (e.g. at work/home, for example voice, typed texts); social interactions (e.g. social network activities).

A data collection 230 can be built by the user and/or automatically. Privacy preferences of individuals can be collected and further compared and/or ruled. For example, data out of the data collection 210 can be associated or matched against a subset of 230 data in case of satisfaction of facts (e.g. conditions, binary, continuous variables, etc) and/or rules (e.g. Boolean expressions, fuzzy logic, second order logic, etc). Data collections can be associated with black-lists and/or white-lists (data fields in silo 210 can specify that a data piece shall never ever be accessed, or accessible under certain conditions, up to accessible on demand without restrictions).

A data collection 230 can be augmented by using data stemming from sensors associated with the computer 100 which via the Operating System 130 can access a plurality of sensors (e.g. domotics, health, GPS/GNSS positions, etc). A "sensor" is an object or a device whose purpose is to detect events or changes in its environment, and then provide a corresponding output. A sensor can be one or more of a pressure sensor, ultrasonic sensor, humidity sensor, gas sensor, motion sensor, acceleration sensor or accelerometer, displacement sensor, force measurement sensor, gyro sensor or gyroscope, temperature sensor, image sensor, video sensor, U.V. sensor, magnetic sensor, CMOS image sensor, a silicon microphone, Inertial Measurement Unit (IMU), micro-mirror, radiofrequency sensor, magnetic field sensor, digital compass, oscillator, luxmeter or light sensor, proximity sensor, G.N.S.S. (e.g. G.P.S.), barometer sensor, Wifi sensor, Bluetooth sensor, NFC sensor, pedometer, pulse oximetry sensor, heart rate sensor, or fingerprint sensor (non exhaustive list).

Data can stem from various sources (i.e. human and/or machine sources). Human data for example can be data voluntarily entered or otherwise shared by users (life logs, blogs, emails, etc). Sensor data can for example originate from domotics, activity trackers or automated cars. Cars and associated devices (be they autonomous cars or not) can lead to significant amounts of data with significant value (e.g. driving style for insurance services). Various parameters can be monitored (e.g. heart rate, sweat, body temperature, brain activity, muscle motion, CO2 levels, commute times and routes, mobility, etc) enabling to quantify physiological or medical conditions, presence (e.g. in the house) or activity (e.g. working in the household, walking, working, sleeping, cycling, swimming, dancing, etc). Resulting data can lead to various analytics, for example individual CO2 index or fingerprint, which in turn can be monetized or taken into account in a financial or non-financial way (e.g. as a counterpart, adjusted prices in public transportation systems). Activities can be quantified (e.g. quality of sleep). If inappropriately associated, data from sensors of life logging can lead to breaches of privacy (such as involuntary publication of sexual activity). Data can originate from the Internet (e.g. parsed texts can augment or otherwise cross-fertilize user and/or sensors' data).

In some embodiments, the data collection 230 may be enriched (statically, by combination) and/or further augmented by access to external data 231. Said external data 231 can be generic data, i.e. not specific to a user, but which can be used to "enrich" or "cross fertilize" or to make sense out of the data collection 230. Examples of external data 231 comprise generic information such as weather information, traffic data or general statistics.

Divisions of data between silos can be dynamic, configurable or both.

The verb "to divide" can be substituted by one of the following verbs: separate, disconnect, segregate, divide, insulate, isolate, sequester, dissociate, quarantine, set apart or split up. Each synonym can present subtle differences in meaning. For example, "to quarantine" conveys the idea of dangerous or critical data, while other verbs underline that data collections cannot overlap, etc.

While in some embodiments silos can be predefined, in some other embodiments the distinction between silos can evolve over time, including in an active manner, i.e. with intention or on-purpose (e.g. according to predefined and immutable rules and/or according to rules governing the distribution of data amongst one or more silos).

In an embodiment ("active defense"), some data in the silo 230 may be - or become - *indirectly* related to the data collection 210. For example, data of silo 230 which at first cannot be associated or associatable with silo 210 may reveal the identity of the user, for example after processing e.g. inference, deduction, cross-reference with external data. For example, techniques known as device fingerprinting or machine fingerprinting or browser fingerprinting leverage information collected about a remote computing device for the purpose of identification. Fingerprints can be used to fully or partially identify individual users or devices even when cookies are turned off. As another example, silo 230 can comprise a list of pseudonyms of a user. If a pseudonym becomes compromised, i.e. the link is established between the true identity of a user and one of his pseudonyms, then all the other pseudonyms may in turn become compromised. As yet another example, a "trash" email address can be later associated with a true identity if a leak has occurred at some point in time (for example in public records, or private but hackable data sets).

As a countermeasure to said *indirect* linking, to protect privacy (avoid revealing the identity of the user), embodiments of the invention may comprise an *active mechanism 211,* whereby sensitive data of silo 230 can be "pumped out" 211 from silo 230 to silo 210. The partition between datasets can be dynamic indeed. For example, an active mechanism can comprise steps consisting in internalizing privacy breach attempts or in emulating identity discovery attacks, as well as other mechanisms. For example, automated intrusion systems and/or human teams of hackers ("white hats") can try to perform privacy breaches, thereby identifying possible privacy flaws. As a result, some critical data in any one of the N silos along the true identity or KYC silo 210 can be detected or flagged. In some embodiments, said critical data can be moved out (in another silo) or deleted or altered or obfuscated or otherwise modified (e.g. a new tier of dataset can be created; data can be rearranged, etc). In some embodiments, contract clauses also can be modified if needed.

In some embodiments ("risk management, probabilistic approach"), data can be segregated into N data collections or repositories (N≥2, as shown by FIG. 2), wherein each data collection can be associated with a *privacy breach risk or probability.*

In some embodiments, a privacy breach risk or probability can be determined and further associated to each data collection (and/or to one or more data, as metadata, i.e. at a higher granularity, when N is a large number).

In some embodiments, privacy breach risks are assessed over time (e.g. at regular or periodic time intervals, on-demand, in response to an attack, etc). As previously described, quality of data anonymization can evolve over time (robustness versus privacy breach can increase over time, but also can suddenly collapse if a given piece of data allows to percolate between distinct datasets and in fine lead to identify an individual). To render anonymization long-term secure, it may be advantageous to re-arrange datasets, for example continuously, e.g. by moving data which can become sensitive when cross-fertilized with some other data to other storage tiers (or for other reasons).

In some embodiments, the dynamic partition of data into N datasets is performed over time (e.g. by automated monitoring daemons or watchdogs and/or human administrators, etc). The surveillance modalities can be diverse (i.e. time-driven e.g. continuous, intermittent, periodic; event-driven; regulator-driven, on-demand by the user, etc).

In some embodiments, the surveillance itself can be ruled by algorithms (steps comprising conditions and facts). In other words, in some embodiments, smart contracts handling the partitioning of datasets can be ruled by a "super-contract" (e.g. the privacy service provider can be a so called "Decentralized autonomous organization" (DAO) which is an organization that is run through rules encoded as smart contracts), or be associated therewith. Logical control layers can thus be articulated (top-down and/or bottom-up): from the control layers being very close to the data (e.g. programs manipulating data at dataset level) up to the objectives pursued by the service provider ("privacy operator") controlling smart contracts governing partitions between data sets.

In another embodiment, *temporary* datasets can be created, mostly for performances issues and/or for tracking purposes. The use of data caches or data buffers can reduce transaction or processing response times. After a dataset is created from a merchant database, the right to be forgotten can imply that the dataset has to be deleted or altered in a certain way; it is therefore advantageous to "pack" related data into an identifiable dataset that can be easily manipulated. In other variants, metadata is added (data describing data), which allows merging the considered data into larger data collections while still being able to exercise appropriate users' rights (such as the right to be forgotten).

### Program

Advantageously, a "program" 220 can be used to *link* one or more data collections amongst the plurality of data collections (for example 210 and 230). Depending on embodiments, the program can create, correlate, reorganize, articulate, substitute, maintain, suspend, merge, fusion, arrange, systematize, coordinate, establish, regulate, adapt, alter, adjust, classify, codify, combine, standardize, delete, dissociate, unlink or otherwise modify links between data collections (or between data within said data collections)

In some embodiments, the only entity capable of establishing the association between the two datasets is the program 220.

In some embodiments, a "program" can be a software program, i.e. a sequence of instructions which when executed on a computer can cause said processor to perform method steps implementing described embodiments.

The software program can implement logic rules, of different logic types (formal logic, fuzzy logic, intuitionist logic, etc). Any type of programming language can be used. The software program can be implemented in different ways: in advantageous embodiments, it can use local and/or remotely accessed resources (processing, storage), it can be distributed, it can use or offer control or service APIs, it can use web services, it can be implemented entirely or in part as hardware embodiment (e.g. FPGA circuit placed in a smartphone).

In some embodiments, it can be advantageous to use fuzzy logic because it may handle personal data or sensitive data in a way which can be more robust than classical logic.

In some embodiments, the software program can use virtualization or variants (sandboxing, virtual machines, containers, operating-system-level virtualization or containerization, partitions, virtualization engines or jails, etc).

The software program governing the relations between data collections can be open source and/or closed source (e.g. while most of the code can be audited, some sensitive or security critical parts of the code can be in binary form, optionally obfuscated if not hardened). In an open source code, bugs or security flaws can be visible to all, but may not be quickly fixed. A program manipulated by embodiments of the invention can be open source in its entirety, but also can comprise some parts in binary code (the source code being not easily obtainable by reverse engineering, i.e. security by obscurity), thereby combining the "best of both worlds" (auditability and trust for some parts, proprietary control for other parts of the code). A program can be further secured by various encryption schemes (including but not limited to post-quantum cryptography, quantum-safe cryptography, Quantum-Key-Distribution, etc). It is observed that in addition to the code of the program being open source and/or closed source, a code escrow mechanism can be used (i.e. combined with restricted access, under (automatable) conditions and/or by a human organization).

Regarding form, a program in particular can be human and/or machine readable. By construction, an (executable) program is machine-readable: facts and rules can be manipulated by machines. Machine readable instructions cannot be read by humans. Human-readable rules or programs generally (often but not always) can be read by machines (e.g. some natural language ambiguities in practice cannot be handled by machines, now or in the foreseeable future). In some embodiments of the invention, it can be advantageous that privacy protection rules coded in the program can be read by humans (for transparency, governance, control, etc). In some embodiments, the program can be written in executable pseudo-code, readable both by humans and by machines. In some embodiments, machine-readable code can be transcoded or otherwise visualized in human-understandable form (e.g. human-readable icons).

In some embodiments, a program can be associated with a user interface. Examples of graphical user interfaces are provided in the drawings.

In an embodiment, the software program governing relations between data collections is coded in a circuit (entirely hardware embodiment). For example, the circuit can be embedded in a micro-SD card, and/or in a USB key, and/or in a hardware dongle pluggable in an available port of a computer (smartphone, smartwatch, wearable computer). In an embodiment, the software program can be an "app", locally executed on a smartphone, optionally sandboxed from the underlying operating system. In an embodiment, the software program is an "instant app", downloadable and executable on-the-fly. In an embodiment, the software program is executed in the Cloud.

### Smart contract

In an advantageous embodiment, the program can be a so called "smart contract". A "smart contract" (acronym SC) or "smart property" is a computerized transaction protocol which executes the terms of a contract (such as payment terms, conditions, confidentiality, and even enforcement). A smart contract is a type of computer program (sequence of instructions) which facilitates, verifies, or enforces the negotiation or performance of a contract. A smart contract can emulate the logic of contractual clauses. According to another definition, a smart contract is a computer program that directly controls the creation, assignment and transfer of digital assets between parties under certain conditions. A smart contract may not only define the rules and penalties around an agreement in the same way as a traditional contract does, but it may also automatically enforce those obligations. It does this by taking in information as input, assigning a value to that input through the rules set out in the contract, and executing the actions required by those contractual clauses. In some embodiments, the verification of the execution of clauses can be performed by humans (e.g. a named third party) and/or machines. Oracle machines can be used. An oracle as a mechanism for determining whether a test has passed or failed and is generally operated separately from the system under test. An oracle can use one or more of heuristics, statistical characteristics, similarity comparisons, or can be model-based.

Using a smart contract can be advantageous in many aspects. It can allow any party to audit the code. It can allow financial transactions, according to different trust models. A smart contract specifies variables and/or conditions to access or communicate data of respective datasets. The smart contract determines communication modalities to each of two predefined datasets/domains (access to data, read and/or write rights). A smart contract can be instantiated by a (e.g. *trusted)* third party for another (e.g. beneficiary) party. A third party requesting data can be an end user (e.g. an individual or a bank), an intermediary (e.g. a data broker), with possible user affiliation (e.g. bank) and/or a role (i.e. access, copy and edition rights).

A smart contract advantageously presents unique features or characteristics, which work synergistically with features of the invention. A smart contract can be auditable: as a smart contract can be published, third parties can verify or otherwise test the code, e.g. contractual clauses. Chains or networks of contracts in particular can be tested (e.g. simulated, emulated, etc). The property of auditability can thus increase trust in the program articulating data collections. Automated enforcement of the smart contract enables larger automations schemes, and in particular allows controlling data flows of private data. Built-in financial features enable many further developments, such as micro-payments and revenue sharing tied with access to private data (privacy monetization).

Depending on embodiments of the invention, the program 220 e.g. smart contract can perform one or more of the following steps (i.e. possibly in combination): a) rule statically and/or dynamically the relations between data of the dataset 210 and the dataset 230 (for example, it can rearrange the tiered architecture of silos so that risks of privacy breach are diminished); b) manage the encryption keys (for example, the exercise of the "right to be forgotten" can be fulfilled by the deletion of private keys, which can impede access to a piece of data designated as obsolete); c) manage access requests and privileges (e.g. read/write rights) associated with each party to the smart contract; d) can record logs of all access requests and/or modifications requests and/or effective modifications brought to data of the different datasets. This list is non-exhaustive.

### Distributed ledgers

In an embodiment, the program can be part of a cryptoledger or distributed ledger. A distributed ledger is a peer-to-peer network, which uses a defined consensus mechanism to prevent modification of an ordered series of time-stamped records. By using one or more cryptoledgers, trust can be further increased. With a cryptoledger, the model of trust is said to be "trust-less": the need to involve a bilaterally accepted trusted third party is eliminated. By contrast with a "trusted" system wherein the trust lies in authorities (e.g. official organizations, national institutions, etc), the large number of copies distributed in the crowd in/by a cryptoledger increases the confidence in the integrity of data (attacks to falsify data are rendered more difficult). The storage of a smart contract in a distributed ledger is advantageous due to the technology's security and immutability of records.

A distributed ledger is a consensus of replicated, shared, and synchronized digital data spread across multiple sites, countries, and/or institutions. In some embodiments, the type of distributed ledger is similar to a "Blockchain". It is comprised of unchangeable, digitally recorded data in packages called blocks and stored in a linear chain. Each block in the chain contains data, also called a "transaction", and is cryptographically hashed. The blocks of hashed data, drawn upon the previous-block which came before it in the chain, ensure all data in the overall "blockchain" has not been tampered with and remains unchanged.

In a particular embodiment, the distributed ledger can be a permissioned or a permissionless distributed ledger (each having pros and cons).

In some embodiments, a distributed ledger can be permissionless. A permissionless ledger uses pseudonymous/anonymous consensus. In order to contribute to the processing of transactions and have a contribution counted, there is no need of a previous relationship with the distributed ledger and the contribution does not depend on having a prior identity of any kind within the distributed ledger. A permissionless ledger implies mining costs and blocks' reorganization risks (e.g. attacks in open systems). Regarding privacy management, a permissionless distributed ledger is advantageous because it maximizes incentives to contribute to the privacy safeguarding system and it maximizes the reach of it.

In some embodiments, a distributed ledger can be permissioned. A permissioned distributed ledger implies that transactions are validated and processed by those who are recognized by the ledger network. A permissioned ledger can use known/trusted validators (closed or controlled systems). A permissioned system can be built on top of a permissionless network. Members of the network must reach a consensus through a vote before a new block in the chain is stored. Each member's vote can count proportionally against everyone else's. Votes or contributions can count proportionally against other parties, based on the specific rules implemented in the distributed ledger. Regarding privacy management, a permissioned distributed ledger is advantageous because it lowers the probability of attacks.

In a particular case, the distributed ledger may be a blockchain. A blockchain is a peer-to-peer network which timestamps records by hashing them into an ongoing chain of hash values.

A blockchain may use Proof-of-Work (PoW). A Proof-of-Work system (or protocol, or function) is a technical measure to deter denial of service attacks and other service abuses by requiring some work from the service requester, usually meaning processing time by a computer. A blockchain based on Proof-of-Work forms records that cannot be changed without redoing the Proof-of-Work. Other systems can be used. For example, Proof-of-Stake schemes (PoS) can be used. Proof-of-Stake designates a type of algorithm by which a blockchain network aims to achieve distributed consensus. In Proof-of-Stake systems, the creator of the next block is selected according to various criteria (e.g. random selection, wealth, age or the like i.e. the stake). Hybrid schemes also can be used. For example "Proof of Activity" can combine Proof-of-Work and Proof-of-Stake, e.g. PoS as an extension dependent on the PoW timestamping).

### Third party

The expression "third party" designates a man and/or a machine. A third party can be a user or group of users, a private organization (e.g. a seller, a bank, a search engine, etc), a public organization (e.g. an official authority, law enforcement, etc), or any other type of parties, being human or machine.

In an embodiment, a third party designates an organization able to deliver the "Know Your Customer" (KYC) label to a natural or legal person, public authority, agency, company or any other legal entity. KYC refers to a legal process that has been in place for several years and is mandatory for banking institutions to guarantee the legitimacy of their customers' activities. It implies a plurality of technical features (levels of proof, verifications and other tests to establish trust).

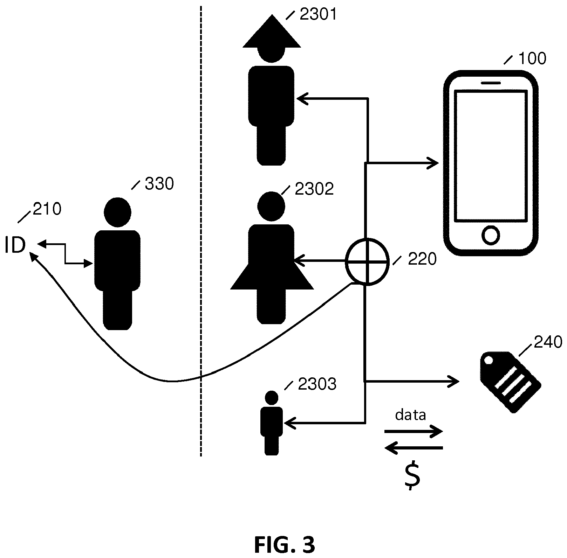

In some embodiments, a third party can be another program controlled by man, for example the real user (confer figure 3).

In some embodiments, a third party can be exclusively another program (e.g. trading software, bot). In particular the third party 240 and/or the program 220 can be associated with a Decentralized Autonomous Organization (DOA) or Decentralized Autonomous Corporation (DAC). A DAO/DAC is an organization or firm which is run through rules encoded as smart contracts. Privacy governance (of smart contracts) can be ruled by such machine entity (additional regulation layer, ultimately programmed by human users).

A third party can be trusted, or not. If the third party is trusted, more data are likely to be communicated upon request (if previously and explicitly authorized in/by the smart contract). If the third party is not trusted, some additional limitations may apply (e.g. less data, blanked fields, etc).

### Partitioning and/or linking mechanisms

A partitioning between datasets and/or the logic implemented in the program 220 to *rule* the association or linking between datasets can use various mechanisms (which can be combined with one another).

A partitioning into distinct datasets or repositories advantageously can compartmentalize sensitive data. For example, the second dataset 230 can be tiered into a plurality of datasets, each corresponding to a quantized privacy breach risk. Data segregation can be predefined or it can be a continuous or dynamic process. The partitioning can be configured automatically according to predefined rules and/or be user-configurable (in whole or in part).

The association of the respective datasets can be handled by the program 220.

In an embodiment, datasets are partitioned (e.g. divisions without overlaps). In an embodiment, datasets are segmented or divided according to predefined criteria. Partitions can be static but also can be dynamically handled (e.g. continuous tests). In an embodiment, the program 220 can operate such partitioning. In an embodiment, said partitioning is performed by both the program according to the invention and one or more other entities.

In an embodiment, the partitioning between datasets and/or the logic implemented by the program may comprise a double-blind mechanism. The underlying principle of a smart contract can be that neither the "initiator" (a third party 240) of the smart contract, nor a service provider (e.g. hosting the distributed ledger and the smart contract) has the ability to unveil data collections, in full or in part, at once (other than by recapture) and the name of the "Beneficiary" (the real user). The initiator only can have access to (frontend) data collections (indistinctively, i.e. not even individualized by user profiles i.e. "Twins profiles"). Conversely, the service provider (operating the cryptoledger and smart contract) can have access to the data collections but not to the individualized data collections. Both organizations need to be solicited to link the user to his/her twins' existence and activities. Such a double-blind scheme can guarantee data privacy.

In an embodiment, the partitioning between datasets and/or the logic implemented by the program may comprise multi-party computation mechanism. Multi-party computation is a subfield of cryptography with the goal of creating methods for parties to jointly compute a function over their inputs while keeping those inputs private. In some embodiments, the creation and the management of a "privacy asset" (a smart contract associating the parties consisting in the real user, a bank, the service provider and the twin data collections) can be handled in a platform executing multi-party computing. Doing so, the handling of such assets can be performed without exposing the private data to other parties than the parties to the smart contract. Twin data collections and aggregated data collections can be handled in a similar manner, compartmentalizing knowledge.

In an embodiment, the partitioning between datasets and/or the logic implemented by the program may comprise homomorphic encryption. Homomorphic encryption is a form of encryption that allows computations to be carried out on ciphertext, thus generating an encrypted result which, when decrypted, matches the result of operations performed on the plaintext. Data storage implemented by the service provider can use encryption (in particular end-to-end encryption). Homomorphic encryption can then allow manipulating directly ciphered data (e.g. process, augment, enrich, and reorganize), i.e. without the need to decipher and/or access to plaintext or clear data. Advantageously, such an encryption mechanism can ensure that even if eavesdropped or otherwise hacked, data collections always remain in an encrypted state.

In an embodiment, the partitioning between datasets and/or the logic implemented by the program may comprise k-Anonymity (e.g. mechanism or steps). K-anonymity designates the property possessed by certain anonymized data, wherein given person-specific field-structured data, a release of said data can be produced with proven guarantees that the individual who are the subject of the data cannot be re-identified, while the data remain practically useful. Different processing methods can satisfy the k-anonymity property. In an embodiment, twin data collections are not necessarily encrypted but are "granularized". For example, one or more data fields can be blurred (for example an age range can be declared between 20 and 40 years old). As another example, instead of revealing the name of the city where an individual is living, it can be responded with the "region" information or a meta description such as "urban". In case of data leaks or hacks, privacy can be safeguarded while the data can remain useful for authorized third parties (e.g. paying for it).

In an embodiment, the partitioning between datasets and/or the logic implemented by the program may comprise I-diversity (e.g. mechanism or steps). I-diversity designates anonymization which is used to preserve privacy in datasets by reducing the granularity of a data representation, by using techniques including generalization and suppression (for example such that any given record maps onto at least k-1 other records in the data). The reduction is a trade off which results in some loss in data management in order to gain some privacy. Advantageously, an I-diversity model can mitigate weaknesses in k-anonymity models (e.g. homogeneity attack or background knowledge attack). l-diversity can improve intra-group diversity for sensitive values in the anonymization process. In some further embodiments, t-closeness models can be used. A t-closeness model extends the l-diversity model by treating the values of an attribute distinctly by taking into account the distribution of data values for that attribute.

In an embodiment, the partitioning between datasets and/or the logic implemented by the program may comprise one or more Virtual Party Protocols. A VPP designates a protocol which uses virtual parties and mathematics to hide the identity of the real intervening parties.

In an embodiment, the partitioning between datasets and/or the logic implemented by the program may comprise one or more Secure Sum Protocols. A SSP allows multiple cooperating parties to compute a sum function of their individual data without revealing the data to one another.

In an embodiment, the partitioning between datasets and/or the logic implemented by the program may implement differential privacy. Differential privacy comprises steps for releasing statistical information about a data collection without revealing information about its individual entries. In particular, it can maximize the accuracy of queries from statistical databases while minimizing the chances of identifying its records.

In an embodiment, the partitioning between datasets and/or the logic implemented by the program may comprise an exponential mechanism. According to such a mechanism, one can output a synthetic dataset in a differentially private manner and can use the dataset to answer queries with good accuracy. Other private mechanisms, such as posterior sampling, which returns parameters rather than datasets, can be made equivalent to the exponential one.

In an embodiment, the partitioning between datasets and/or the logic implemented by the program may use quasi-identifiers. Quasi identifiers can, when combined, become or lead to personally identifying information. Quasi identifiers are pieces of information which are not unique identifiers as such, but which are sufficiently correlated so that they can be combined with other quasi identifiers to create a unique identifier. Quasi identifiers can thus, when combined, become personally identifying information.

In an embodiment, the partitioning between datasets and/or the logic implemented by the program can use Statistical Disclosure Control (SDC). SDC designates techniques (i.e. steps) used in data driven research to ensure no person or organization is identifiable from a dataset (for example as used in a survey or research). SDC can be principles based and/or rules based. SDC ensures that individuals cannot be identified from published data, no matter how detailed or broad, establishing a balance between protecting confidentiality and ensuring the results of the data analysis are still useful (e.g. for advertising, statistical research, etc). In rules based SDC, a rigid set of rules is used to determine whether or not the results of data analysis can be released (e.g. what kinds of output are acceptable). In principles based SDC, any output may be approved or refused by one or more users.

In an embodiment, the link mechanism can use a federated architecture (e.g. processing, storage, learning). The expression "federated learning" enables local computing devices to collaboratively learn a shared prediction model while keeping all the training data on device, decoupling the ability to do machine learning from the need to store the data in the cloud (and thus to endanger privacy). Likewise federated processing refers to the distribution of processing power and/or storage of sensitive data.

FIG. 3 shows an example of privacy management according to an embodiment of the invention. The figure provides another representation of the previous figure.

A (real) user 330 is associated with true Identity Data 310. Data collections 2301, 2302 and 2303 ("twins" or "twin domains" or "twin profiles") have been defined by the user (or are constituted automatically). These data collections are exposed via the smartphone to inquiries and requests by third parties (the crowd). The smart contract 240 can rule the relations between data collections. In particular, the smart contract is the unique entity, aside the real user, which can associate the true identity 310 with one or more of the data collections. The smart contract 240 is executed on the smartphone and/or in the Cloud (in a distributed ledger, not shown).

In an embodiment, the user has the ability to switch (select and activate) a given twin profile amongst the plurality. The selected profile will be the "acting" profile for the smartphone (i.e. the identity profile considered by the smartphone, for example for logins and passwords, stored name, surname, address, etc). The user can be given the ability to switch profiles at any time.

In an embodiment, independently to such a manual switching, the true ID can remain protected and the smart contract can continuously arbitrate the switching between profiles. For example, when browsing a reliable or trustable commerce website, a particular twin data collection with many data can be acting. When crossing a sensitive border, susceptible of requests by customs authorities, an identity with less data can be loaded. A contrario, when a trustable or friendly customs border is about to be crossed, a less anemic identity profile can be presented. In some embodiments, embodiments of the invention comprise mechanisms to "derive" one or more twin data collections from an initial data collection. For example, entirely fake twin data collections can be created, but also plausible ones. The attribute of plausibility can be assessed quantitatively, for example if data fields are being ranked (the name and surnames being considered as more sensitive data than street address, but possibly less sensitive than the usual phone number). Contextual data can modulate such rankings.

Aside manual operations, the privacy management can be automated. As a result of the enforcement of the smart contract (i.e. of its contractual clauses), the smart contract can tie or link the true identity of a user with one or more data collections associated with the user (e.g. a twin profile being instantiated in the smartphone). Before all, the smart contract can monetize private data with third parties.

For example, a third party namely a merchant may want to know the purchase history of a real user visiting a website, in order to better rank pages, or to adjust advertisements. The smart contract, based on prior choices made by the user and encoded in the smart contract, may agree to sell such a purchase history to the merchant (directly via a micro-payment, or indirectly via a personalized promotion code). In another example, a merchant selling sport equipments may be interested in knowing sportive activities and performances of a particular user for research and statistical purposes. In such case, going deeper in particular subfields of personal activities can be justified and can lead to a (transparent) win-win outcome.

Importantly, during transactions, when initiated by a trusted third party, anonymity can be guaranteed: the smart contract acts as a shield to protect ultimate critical data. The smart contract empowers one twin data collection, for example through a KYC attribute. In case of wrongdoing, public authorities can still identify the individual as the beneficiary of the smart contract. Some additional limitations may apply when not initiated by a trusted third party.

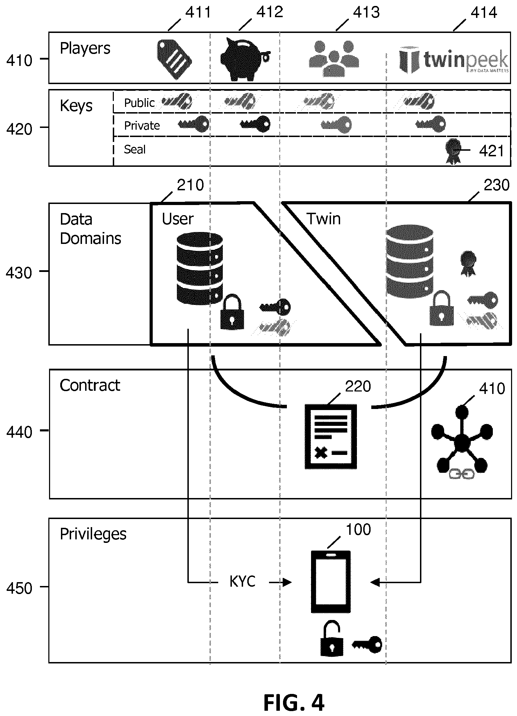

FIG. 4 shows an embodiment of the invention with emphasis on the management of encryption keys.

The figure shows examples of players 410, e.g. one or more of a non-trusted third party 411, trusted third party 412, a user 413 and a service provider 414. Players 410 handle encryption keys 420 to access (e.g. to read and/or write) data of datasets 430, via the rules and logic provided by one or more programs 440 (e.g. smart contract 220). The link or relation or association between datasets (210, 230) ruled by the program 440 (e.g. smart contract 220) can be enabled by cryptographic methods, e.g. the use of encryption keys. Data communication (e.g. access, read, write) can be ruled according to predefined rules. A program 440 can be a smart contract 220 instantiated on a (e.g. permissioned) distributed ledger 410 (transactions related to the smart contract are stored in a distributed ledger). Program(s) 440 can handle privileges 450, so as to communicate data selected from dataset 230 in relation to data of dataset 210 (e.g. a KYC value), associated to a (physical) individual.

### Players

Different roles can be distinguished. The following description only provides examples. Described categories are mere "nicknames": other players' categories can be used.

A "consumer" or "user" or "physical user" or "contractor" designates an end-user who is in need to secure and/or anonymize and/or hold his/her data. A physical user can create one or more "twins" or "beneficiaries", i.e. digital representations or accounts.

A "trusted tier" or a "third party identity provider" designates an entity with the ability (delegated authority) to deliver KYC certification. Such an entity can be a bank, a telecommunication operator, a utility provider, an identity provider, etc. The term "peer" rather refers to permissioned ledgers. In some embodiments, "trusted tiers" can be elevated to be "trusted peers".

A "Data & Analytics Partners" (acronym DAP) designates a (significant) pool of (diverse) players which can act on data, i.e. process (e.g. enrich and cross-fertilize, format, etc) and/or analyze (e.g. analytics, statistics, Big Data, predictive analytics) and/or visualize and/or rate and/or store and/or trade (e.g. data broker, etc) data. DAP entities can thus be companies involved in consolidated markets (e.g. data analytics) or even emerging markets (e.g. big data operators, privacy rating agencies). DAP entities may want to comply with privacy regulations, for them, for their partners or their end-users.

The "service provider" (e.g. Twinpeek) designates the entity controlling the smarts contracts (in turn controlling access and usage of private data).

An "auditor" designates an entity capable of running an audit to assess compliance to regulations (legally binding but also possibly codes of good conducts etc).

A "regulator" designates national or governmental or official authorities developing, deploying and enforcing regulations.

### Datasets

The datasets for example can comprise "data domains" 210 and 230.

The dataset 210 comprises personal identifiable data ("user" data). In some embodiment, KYC procedures (e.g. steps) can be used to create the dataset 210 ("user" data domain). In a KYC procedure, personal information can be first acquired (e.g. customer provides name, address, source of wealth, etc) by an institution (organization associated with a specific level of trust). A non-trusted third-party cannot have the ability to deliver KYC (a resulting smart contract would not then be labeled as KYC). Received personal information can be validated (authenticity can be reviewed by human agents and/or machines, i.e. possibly technically cross-checked). The receiving institution (as a trusted party) then can store the received and validated information in a data storage system (which can be potentially vulnerable, as any computerized system). The institution can update information when changes are requested.

### Contract datasets and smart contracts

A physical user can create one or more "twins" or "beneficiaries", i.e. digital representations or accounts. Once a smart contract is established, a physical user can instantiate one or more "twins".

An entity previously authorized or acting on behalf of the user or account (a "Holder") can create or instantiate or modify the smart contract 220.
The contract dataset comprises transactions related to one or more smart contracts 220.

A transaction designates any data record (such as SQL statements) depicting an activity related to the datasets 210 and/or 230.

A distributed ledger 410 can store transactions related to the one or more smart contracts.

The contract dataset can be encrypted.

### Cryptography

Advantageously, cryptography can be used. Encryption prevents or impedes or slows-down privacy breaches (information security on top of information confidentiality).

Regarding the terminology, terms like "ciphering" and "deciphering" keys can be generally considered as being respective synonyms to "encryption" and "decryption" keys (the latter terms putting emphasis on cryptanalysis attacks).

### Examples of management of encryption keys

In some embodiments, the management of encryption keys (e.g. public and private keys) is ruled (in part or in full) by the software program (or smart contract, in a particular embodiment). Datasets 210 and/or 230 can be encrypted. The physical user is a "subscriber"). A "beneficiary" is a "twin". A "holder" is an entity which holds (raw) data, for example a "trusted tier" such as a bank, or a "third party provider" (such as an e-commerce merchant). Keys are managed by the super-entity endorsed by/in the smart contract.

In an embodiment, there is disclosed a method of handling personal data comprising the steps of: - a program 220 associating data of a first dataset 210 with data of a second dataset 230, wherein the first dataset 210 comprises personal identifiable/identifying data of a physical user ("subscriber") and wherein the second dataset 230 does not comprise personal identifiable/identifying data ;- receiving a request for data of the first and/or second datasets;- determining in/by a program 220 communication modalities to said requested data;- communicating requested data or parts thereof.

In an embodiment, data of the dataset 210 and/or the dataset 230 is ciphered (or encrypted).

In an embodiment, symmetric encryption is used. For example, keys according to AES 256 bits currently present sufficient security; if needed, the length of keys can be adjusted e.g. increased).

In an embodiment, asymmetric encryption is used i.e. public key cryptography can be used. Asymmetric cryptography designates a cryptographic system which uses pairs of keys: public keys which may be disseminated widely (e.g. published), and private keys which are known only to the user or owner. Two functions can be performed: authentication (wherein the public key is used to verify that a holder of the paired private key has sent the message) and/or encryption (whereby only the holder of the paired private key can decipher the message ciphered with the public key).

In a particular embodiment, the holder of the smart contract can encrypt personal data of the subscriber using a key pair [holder private key; subscriber public key]. The subscriber can thus access the content using the decryption key pair [subscriber private key; holder public key].

In some embodiments, for example to prevent wrongdoings and/or to provide some traceability of activities when a contract is enrolled by a non-trusted third party, data associated with a user (depicting a "twins"' activity) may be deciphered by the service provider 414. The second dataset 230 in such embodiment can be encrypted, for example by using standard public key encryption. The service provider can store all activities related to the user or account or twin associated with the contract, by using the key pair [service provider private key; subscriber public key]. The subscriber in the meantime can access his content at any time using the decryption key pair [subscriber private key; service provider public key].

In an embodiment, at least some data of the dataset 210 and/or the dataset 230 may be personal identifiable/identifying data relating to a user named beneficiary or "twin". In an embodiment, the program can comprise a smart contract subscribed by said user ("beneficiary" or "subscriber" or "twin"). In an embodiment, the smart contract can be implemented in a permissioned distributed crypto-ledger; and the request for data can be received from a trusted third party, said trusted party being part of the permissioned distributed crypto-ledger.

In an embodiment, the method may comprise a step of ciphering the requested data with the holder private key and the user public key; and a step of deciphering the requested data with the holder public key and the user private key.

In an embodiment, at least some data of the dataset 210 and/or the dataset 230 may be personal identifiable/identifying data relating to a user; the program can comprise a smart contract subscribed by said beneficiary; the smart contract can be implemented in a permissioned or in a permissionless distributed crypto-ledger; and the request for data can be received from a non-trusted third party, said non-trusted party being not part of the permissioned or permissionless distributed crypto-ledger.

In an embodiment, data of the dataset 210 and/or of the dataset 230 is ciphered with a key pair comprising the user private key and an (ephemeral/user) public key; and, for example in response to a request for data or a request to exercise a right to erasure), the method comprises the step of the user deciphering the requested data with the user private key and the public key. The requested data cannot be decrypted by service provider.

In an embodiment, data of the dataset 210 and/or of the dataset 230 is ciphered with a key pair comprising the user public key and a service provider private key; and, for example in response to a request for data communication or a request to exercise a right to erasure, the method comprises the step of the user deciphering the requested data with the user private key and the service provider public key; and the service provider deciphering the requested data with the service provider private key and the user public key.

In an embodiment, data of the dataset 210 and/or of the dataset 230 is ciphered with a key pair comprising the trusted party private key and the user public key; and, for example in response to a request for data or a request to exercise a right to erasure, the method comprises the step of the user deciphering the requested data with the user private key and the trusted party public key; and the trusted party deciphering the requested data with the trusted party private key and the user public key.

In an embodiment, data of the dataset 210 and/or of the dataset 230 is ciphered with a key pair comprising the user public key and an ephemeral public key; and for example in response to a request for data communication or a request to exercise a right to erasure, the method comprises the step of the user deciphering the requested data with the user private key and the user public key. The requested data is sealed and cannot be decrypted by the service provider.

In some embodiments of the invention ("encrypt and forget"), a public key encryption is used and a short-life "ephemeral" key is used. Advantageously, data of the dataset can only be revealed to the data owner (the user or beneficiary). Such embodiment is advantageous when the contract is KYC (accountability).

In some optional and advantageous embodiments, asymmetric encryption can use seals or seal boxes 421.

A "sealed box" may comprise a key pair associated with a message (comprising data), and said key pair includes a private key and a public key, said key pair can be ephemeral or of short life time, and the private key pair can be destroyed shortly after encrypting the message (comprising data).

A "sealed box" is designed to anonymously send a message to a recipient given its public key. Only the recipient can decrypt the message, using its private key. While the recipient can verify the integrity of the message, it cannot verify the identity of the sender. The message is encrypted using an ephemeral key pair, whose secret part (private key) is destroyed right after (or shortly after) the encryption process. Without knowing the secret key (private key) used for a given message, the sender cannot decrypt its own message later. Without additional data, a message cannot be correlated with the identity of its sender. The term "destroyed" can mean "deleted" or "forgotten", logically and/physically.
In some embodiments, the service provider 414 for example can use a sealbox 421.

In an embodiment, for example when the contract is enrolled by a trusted third party, the dataset 230 can be encrypted and further sealed (i.e. only the beneficiary may decipher the content). The service provider can store and access data of the dataset 230 related to the twins associated to the corresponding contract using the key pair [ephemeral secret key; beneficiary public key]. The beneficiary in turn can access the content by using the decryption key pair [beneficiary private key; beneficiary public key].

In some embodiments, one or more ephemeral encryption keys can be used. Deciphering is generally only allowed with physical user agreement.

In an embodiment, data is further secured by using format-preserving encryption. In an embodiment, Format Preserving Encryption (FPE) can be used. Format-preserving encryption (FPE) refers to encrypting in such a way that the output (the ciphertext) is in the same format as the input (the plaintext). Using FPE is advantageous to integrate encryption into existing applications (e.g. by allowing a drop-in replacement of plaintext values with their cryptograms in legacy applications). Such an embodiment enables the integration into existing datasets 210 and/or 230 (e.g. ERP, CRM, e-commerce management store, customer purchase tracking tools). Using FPE, some records and/or fields can be ciphered. Views and forms of the database can remain largely unchanged. Such an embodiment also enables the integration into large-scale privacy management systems.

In an embodiment, data is further secured by using quantum key distribution and/or post-quantum encryption. Regarding quantum key distribution (QKD), a third party trying to eavesdrop on encryption key must in some way measure it, thus introducing detectable anomalies. Advantageously, QKD impedes eavesdropping when determining and sharing encryption keys. In an embodiment, post-quantum encryption (or "quantum-resistant" encryption or "quantum-safe" encryption) can be used. Post-quantum cryptography refers to cryptographic algorithms (e.g. lattice-based, multivariate, hash-based, code-based, super-singular elliptic curve isogeny, and symmetric key quantum resistance) that are thought to be secure against an attack by a quantum computer, whose advent can be possible in the future. By using this type of encryption, transactions stored in the distributed ledger and/or datasets can be secured in the long term.

In an embodiment, data is encrypted at rest and/or during transport. Depending on embodiments, encryption can be performed at rest and/or during transport. For example, when the contract is KYC, data is ciphered at rest to prevent breaches. When the considered contract is not KYC, data can be ciphered during transport only. The service provider can then decipher data, for example to respond to legal injunctions, when requested by national authorities.

In further embodiments, one or more mechanisms can be used, for example steganography, biometrics, warrant canaries, physically unclonable functions.

### Access to data

In some embodiments, access to data (by the service provider and/or users) can occur at any time.

In some embodiments, access to data can be conditional on predefined conditions, for example on predefined timeframes (e.g. predefined times or schedules) and/or to other conditions (e.g. double authentication).

Embodiments related to roles of the third party quality and of the service provider.

While the user can always access his data, different embodiments of encryption of the datasets can be considered. In particular the dataset 210 and/or the dataset 230 can be rendered inaccessible to the third party, or even the service provider. Access can be parameterized, i.e. can be rendered conditional (e.g. to predefined secrets, identity, quality, biometric proofs, facts and/or rules and/or other parameters). For example, access to data can be managed at the same time, i.e. by handling simultaneous access. Access can be considered over time, e.g. by handling time intervals. Data access can be locked (for example with steadily increasing latencies as more data requests are received).

Read and/or write privileges can be allocated to the different roles (e.g. consumer or client or user, trusted party, non-trusted party, DAP, service provider, Twin, Auditor, Regulator, Government, etc) according to different schemes. The granularity of privileges can be configurable indeed (for example the "User KYC citizenship" data field can be rendered accessible to all parties while the "User ID" can be accessible to the service provider only).

Different embodiments can be considered, in particular when considering whether the third party is trusted or not. Two different examples are provided (not exhaustive).

### Case 1 - Enrollment from a trusted third party

A trusted party for example can be "agreed" by the physical user (legal concept translating into technical features and requirements, e.g. validity tokens, authentication, seals, etc).

The dataset 210 ("User Domain") can be encrypted in different ways. In an embodiment, a key pair comprises {user public key; trusted party private key}. The dataset 210 can be ciphered by a user using a key pair comprising {user private key; trusted party public key}. The dataset 210 can be deciphered by a trusted party using a key pair comprising {trusted party private key; user public key}. The dataset 210 can be deciphered by the user. In some embodiments, the dataset 210 can be deciphered by the service provider. In some embodiments, the dataset 210 cannot be deciphered by the service provider.

The dataset 230 ("Twin Domain") can be encrypted in different ways. In an embodiment, a key pair comprises {user public key; ephemeral key}. The dataset 230 can be deciphered by the user using a key pair comprising {user private key; user public key}. In an embodiment, the dataset 230 can be sealed 421 (i.e. cannot be deciphered thus read by the service provider 414).

### Case 2 - Enrollment from a non-trusted third party

The dataset 210 ("User Domain") can be encrypted in different ways.

In an embodiment, a key pair may comprise {non-trusted party private key; ephemeral key}. The dataset 210 can be decrypted by a non-trusted party using key pair comprising {non-trusted party private key; non-trusted party public key}. The dataset 210 cannot be decrypted by the service provider.

The dataset 230 ("Twin Domain") can be encrypted in different ways. In an embodiment, a key pair may comprise {service provider public key; ephemeral key}. The dataset 230 can be deciphered by the service provider using key pair made of {service provider private key; service provider public key}.

### Storage

The dataset 210 comprises sensitive data, i.e. personal identifiable data. This data can be stored in many different ways, which can be combined. In an embodiment, the storage is performed offline (for example "cold storage" can be used; data storage can be maintained separated from the network to prevent or limit attacks or illicit access). In an embodiment, one or more datasets (or pieces of data) can be stored in an encrypted state (at rest). Depending on embodiments, centralized and/or distributed storage can be used. For example, in an embodiment, data (or the sensitive part thereof) is stored by trusted peers of the service provider, thereby relying on their respective capacities to securely hold sensitive material (such methods may require auditability or at least descriptions thereof). In another embodiment, data can be centralized and stored securely by the service provider. In some embodiments, hybrid storage systems can be used, using both centralized and distributed storage. Requirements associated to data analytics can lead to specific storage architectures.

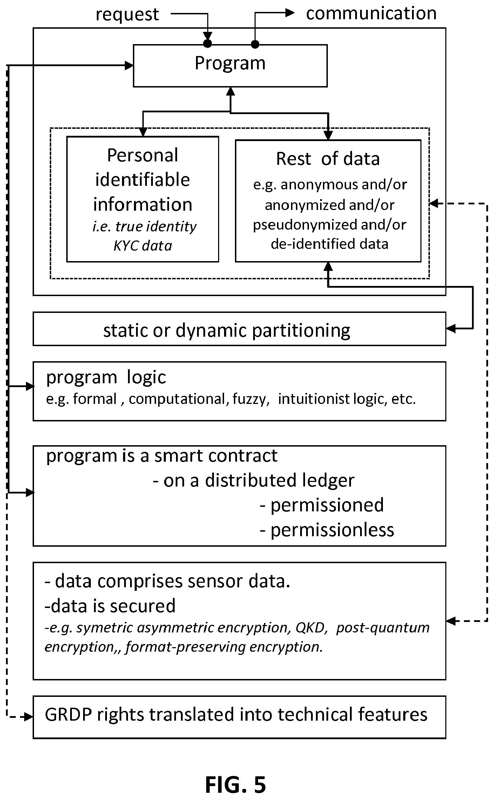

FIG. 5 shows examples of steps of an embodiment of the invention.

There is disclosed a method of handling personal data comprising the steps of: a program 220 associating data of a first dataset 210 with data of a second dataset 230, wherein the first dataset 210 comprises personal identifiable data (for example of a user, or of a plurality of users) and wherein the second dataset 230 does not comprise personal identifiable data ; receiving a request for data of the first and/or second datasets; determining in/by a program 220 communication modalities to said requested data; communicating requested data or parts thereof.

There is disclosed a computer-implemented method comprising the steps of: a program 220 associating data of a first dataset 210 with data of a plurality of tiered datasets (230 and others not shown), wherein the first dataset 210 comprises personal identifiable data and the plurality of tiered datasets comprises data which may be associated to personal identifiable data.

There is disclosed a computer-implemented method comprising the steps of: a program 220 associating data of a first dataset 210 with data of a plurality of tiered datasets (230 and others not shown), wherein the first dataset 210 comprises personal identifiable data and the plurality of tiered datasets comprises data which may be associated to personal identifiable data, the partitioning of data in tiered datasets being performed according to discrete associability levels, said associability levels determining the risk of association of data of a tiered dataset with personal identifiable data.

There is disclosed a computer-implemented method comprising the steps of: a program 220 associating data of a first dataset 210 with data of a plurality of tiered datasets (230 and others not shown), wherein the first dataset 210 comprises personal identifiable data and the plurality of tiered datasets comprises data which may be associated to personal identifiable data, the partitioning of data in tiered datasets being performed according to discrete associability levels, said associability levels determining the risk of association of data of a tiered dataset with personal identifiable data, said risk designating the risk to directly unveil and/or to indirectly lead to the personal identifiable data; receiving a request for data of the first and/or plurality of datasets; determining in/by a program 220 communication modalities to said requested data; communicating requested data or parts thereof.

There is disclosed a computer-implemented method comprising the steps of: a program 220 associating data of a first dataset 210 with data of a plurality of tiered datasets (230 and others not shown), wherein the first dataset 210 comprises personal identifiable data and the plurality of tiered datasets comprises data which is *associatable* to personal identifiable data, the partitioning of data in tiered datasets being performed according to discrete associability levels, said associability levels determining the risk of association of data of a tiered dataset with personal identifiable data, said risk designating the risk to directly unveil and/or to indirectly lead to the personal identifiable data, and said risk being continuously determined according to predefined criteria comprising privacy breach probability or privacy breach simulation; receiving a request for data of the first and/or plurality of datasets; determining in/by a program 220 communication modalities to said requested data; communicating requested data or parts thereof.

In an embodiment, the first dataset 210 comprises true identity information.

In an embodiment, the first dataset 210 comprises KYC compliant data.

In an embodiment, the second dataset 230 comprises anonymous and/or anonymized and/or pseudonymized and/or de-identified data.

In an embodiment, the second dataset 230 is partitioned into a plurality of datasets associated with discrete levels of privacy breach risks.

In an embodiment, the partitioning between datasets and/or the logic implemented in the program 220 uses one or more mechanisms selected from the group comprising multi-party computation, homomorphic encryption, k-anonymity, I-diversity, Virtual Party Protocols, Secure Sum Protocols, differential privacy, exponential mechanism, Statistical Disclosure Control, double blind mechanism or quasi-identifiers.

In an embodiment, the program 220 implements one or more of formal logic, computational logic, fuzzy logic or intuitionist logic.

In an embodiment, the program is a smart contract.

In an embodiment, the smart contract is instantiated in a distributed ledger.

In an embodiment, the distributed ledger is a permissioned ledger.

In an embodiment, the communication of requested data is conditional on a financial transaction.

In an embodiment, data comprises sensor data.

In an embodiment, data is secured by using one or more of symmetric encryption, asymmetric encryption, quantum key distribution, post-quantum encryption, and/or format-preserving encryption.

In an embodiment, the second dataset 230 comprises GDPR compliant data, said GDRP data being associated with predefined rules with respect to disclosure consent, data breach monitoring, data deletion and data portability.

There is disclosed a computer program comprising instructions for carrying out one or more steps of the method of the invention according to its various embodiments when said computer program is executed on a computer.

In an embodiment, there is disclosed a computer-implemented method of handling personal data comprising the steps of: - a smart contract (220) instantiated in a cryptographic distributed ledger (220), permissioned of permission-less, associating data of a first dataset (210) with data of a second dataset (230), wherein the first dataset (210) comprises personal identifiable data such as true identity information and/or Know Your Customer data and wherein the second dataset (230) does not comprise personal identifiable data or comprises anonymous and/or anonymized and/or pseudonymized and/or de-identified data; - receiving a request for data of the first and/or second datasets;- determining in/by the smart contract communication modalities to said requested data (e.g. authorization, forbidden access, required modifications, preferred modifications to minimize privacy breaches, etc);-communicating requested data or parts thereof (if applicable, i.e. according to determined communication modalities, as ruled by the smart contract). The step of *associating* data of the first dataset (210) with data of the second dataset (230) can comprise various partitioning mechanisms (data tiering, for example according to privacy breach risks) and/or data access mechanisms (e.g. allocation of read and/or write rights, or applicable rules thereon, handling of requests to access and/or to modify data, etc). Data in datasets can be encrypted, in particular by using format-preserving encryption.

### Regulatory framework translated into technical features

The General Data Protection Regulation (GDPR, 2016/679) is a regulation by which European authorities have defined the framework wherein the member States should regulate data protection for individuals within the European Union.

Associated requirements (of legal and/or business nature) can be translated into *technical* features, which can be combined with embodiments of the invention (that is the specific mechanism of data segregation/partitioning/compartmentalization regarding association or associability with personal data, ruled by software or smart contract).

In particular, read/write (R/W) rights may - or shall, to comply for some regulations - be managed in configurable or configured ways.

The "right to be informed" for example can translate into steps of notifying users of the processing of personal data (of the first dataset 210 and/or the second dataset 230). Notifications can be performed in different ways. They can be pushed by emails, phone messages, automated phone calls, RSS, etc. They also can be pulled (i.e. by the user, for less intrusivity e.g. with a monitoring dashboard where the user can check the status of the processing). Granularity can be configurable. In some embodiments, each data field can be monitored separately e.g. passport number. In some embodiments, clusters of groups of data fields can be manipulated (e.g. region along zip code and city information). In some embodiments, the number of (effective and/or requested) accesses to each data field (or cluster of data fields) can be counted and further displayed. In some embodiment, the party having accessed a specific data field can be traced. In some embodiment, a user can configure one or more alarms or alerts (e.g. for access to a specific data field e.g. birth date, or in case of excessive accesses).

The "right of access" corresponds to diverse privileges. It primarily implies access control lists management. For example, read rights in dataset 210 and/or 230 shall be granted to the physical user, while denied to other parties. The R/W rights' scheme can be encoded in the smart contract. In some embodiments, the "right to access" can be testable. It for example may be tested by automated tests, for example performed randomly and/or by independent parties. The "right to access" can be associated to an escalation procedure, wherein if a user cannot get a copy of data associated with his/her profile; an incident ticket can be opened and reported to a regulating party. In order to protect undue access to data, the "right to access" can be conditional on the provision of a proof of identity (e.g. biometry, two-steps authentication, etc).

The "right to rectification" and the "right to erasure' (also known as "the right to be forgotten") is technically complex to handle. It generally relate to the management of read/write rights. In some aspects, technical implementations of the "right to be forgotten" may correspond to a "positive" or "volunteer" or "self-controlled" censorship.

The "classical censorship" led to numerous efforts, both in defense (i.e. to circumvent censorship) or in attack (i.e. to reinforce censorship). Problems and solutions nevertheless may not be exactly symmetrical for "positive censorship". "Classical" censorship can use techniques comprising black lists of words, white lists thereof, similarity computations, natural language processing if not semantic reasoning for the most advanced techniques; operations at data transport level (encryption but also deep packet inspection, manipulations of DNS, certificates and SSL levels, use of VPNs and other tunneling techniques, use of TOR or other similar onion routing techniques, mesh or ad hoc networks, proxies, refraction networking, etc). These techniques (plurality of steps) can generally be modified to be turned to the advantage of a legitimate user (having sufficiently proved his/her true identity, i.e. by satisfying predefined criteria).

The general problem of this "positive" censorship can be seen according to a perspective of centralization versus decentralization (distribution) of the contents; this approach can provide the main classes of foreseeable embodiments.

In an embodiment, the "intelligence" may be centralized. In some embodiments, precisely as proposed by the invention, personal data can centralized - in a secure manner and therefore controlled - by one or a couple of service providers. Centralizing data implies that rectification if not deletion of data can be better controlled (by contrast to models with a large number of copies of data). The mechanisms previously described with respect to asymmetric encryption can technically prove and guarantee the appropriate access to data (and modifications thereof). A centralized model provides incentives to further centralize data with a given service provider. If and when data portability is ensured, there may not even remain a dependency towards the service provider (data portability means that service providers can be interchanged).

In some embodiments, when data is encrypted, the deletion of keys (kept centralized) can advantageously impede access to clear content, third parties possibly having a copy of the obsolete piece of data (control can imply some form of centralization, for example by a private organization; alternatively, contracts between parties can create multilateral, obligations; filters can clean-up data on the go during exchanges between non-cooperating parties).

In an embodiment, with less centralization, the "intelligence" can be distributed in the network. Internet service providers may be officially controlled or constrained by nation states and may implement the positive censorship or "right to be forgotten".

In an embodiment, with emphasis on distribution, the intelligence can be attached to the data: metadata can be conveyed along each piece of data. Metadata is data about data, e.g. stating the status of the data. Metadata may comprise web addresses of each of its copies, with some similarity with a bitorrent tracker. Whenever a piece of data is received by/at a machine, the rights attached to said data piece can be known. A receiving machine may be cooperative (i.e. removing the required data if applicable and stopping propagation of obsolete data if applicable). A receiving machine may be non-cooperative (at the opposite it may be malicious and encourage propagation). As the use of the piece of data increases, so would the amount of associated metadata.

The different models, with various degrees of centralization or distribution, may be hybridized i.e. combined according to various schemes. For example, nation-state approved servers in Europe may filter checksums of data pieces deleted according to the exercise of the "right to be forgotten" and metadata conveyed with each piece of data can point to centralized databases comprising the details of addresses of the copies, etc. As another example, if a data field or piece is deleted by the exercise of the right to be forgotten, then the multiple copies of said data field or pieced can be deleted, either actively (i.e. immediately in internal databases) or passively (e.g. filters can modify returning data on the fly, if copies of said data have been communicated to uncontrollable or uncontrolled third parties). Internet service providers operating at large scale can implement such mutualized filters. Advantageously, inheritance mechanisms can advantageously enable further traceability.

Versus the "right to be forgotten", not only the exercise of the right can be implemented in a technical manner, but also the proof thereof.

For example, different levels of proof can be provided to a user demanding if the considered data field has been rectified or modified indeed. Several embodiments are further described. In an embodiment, automated screenshots of the associated spreadsheet, if any, can be provided. In an embodiment, the hash value of the full profile may be communicated (it shall change if data is deleted). In an embodiment, the user can or shall be entitled to access further the data in question and to later verify that the obsolete data no longer is accessible. For example, the user may be provided with search features to double-check that data has been actually deleted. Further levels of proof can be provided: for example, the service provider can send a paper letter confirming that the considered data has been deleted. As internal matters, the service provider can establish management rules to handle backup copies accordingly (deletion of a data field can require to delete all occurences in backup copies); and such management can be audited by an independent third-party.

The "right to restrict processing" may correspond to a particular handling of administration rights (privileges or superadmin role), for example as encoded in the software program 240. Such a right can also use previously described inheritance properties, since metadata about a raw data field can specify that a data piece cannot be used in a larger computation (for example, the name of a person may be specified to be combinable with data relating to sport but not to data relating to medical affairs).

The "right to data portability" may be associated with different steps. Data portability means that a user is able to switch service providers without undue burden. Corresponding to data portability, the method may comprise a step of downloading in full or in part data associated with a given user profile (and to be able to further delete downloaded data from the associated service provider). To facilitate the handling of data by the user, optional features such as search, filter or visualization of data can be provided, optionally or mandatorily. For example a user may or shall be able to search within stored data fields, to select specific data fields of interest, to choose an export format between a plurality, in order to be able to "cut", "copy" and "paste" any data piece of his personal data across different service providers. External and independent control mechanisms can be setup so as to count the number of steps (required to dump or evade data) imposed by the service provider.

The "right to object" can translate into a dedicated and secured communication channel, established between the requesting user, the service provider and possibly the regulator (for example in carbon copy). Particular timeframes may be setup (so that a response is brought before a maximal delay). Registered letters or electronic receipts may be used.

The right in relation to "automated decision making and profiling" can be associated with technical measures enabling, or slowing down, or speeding up or preventing data processing. Such mechanisms can be encoded in the smart contract, typically. Proof-of-work systems (or variants thereof) can be used to regulate or otherwise authorize processing. For example, by design, a user may want to restrict uses of his medical condition. The first access or processing can cause no delays, but programmatically each further marginal processing can exponentially increase the required proof-of-work (unless the user gives explicit and direct consent).

The right directed the "valid and explicit consent for data collected and purposes of data used" may refer to particular data fields in the managed databases. In some embodiments, the consent or "opt-in" may have a general scope and a specific predefined duration, before renewal. In some embodiments, the consent shall be received at each processing step. In some embodiment, consent can be withdrawn (for example at any time from the user dashboard).

Some other rights can be derived from the mentioned rights. For example, security breaches may be reported to users (at least if certain conditions are met, e.g. flaw is patched, in a predefined timeframe).

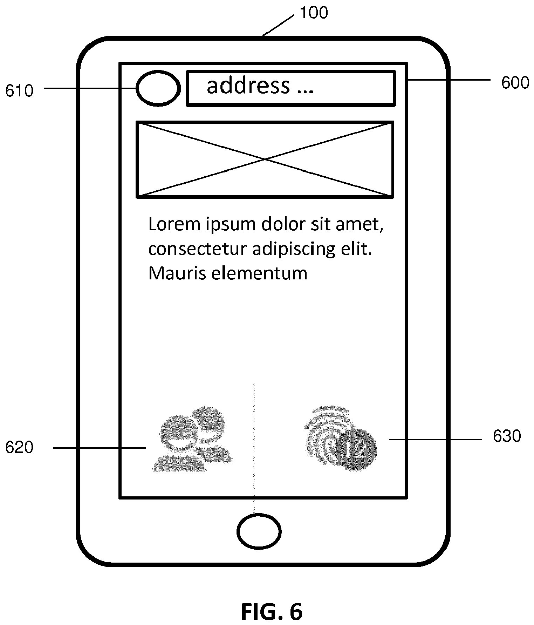

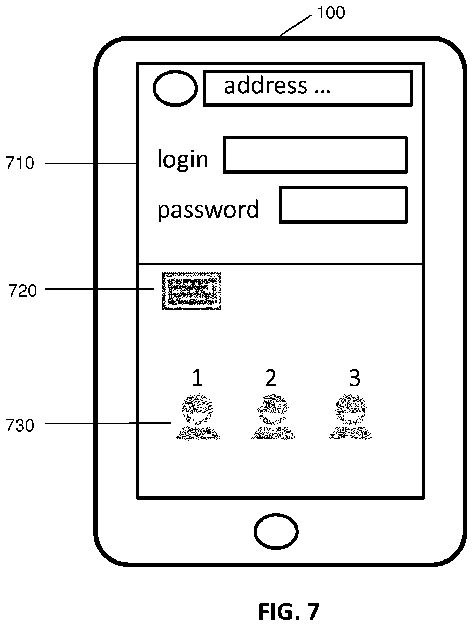

FIG. 6 and 7 show examples of user interfaces of a web browser for privacy management.

Figure 6 shows an example of a specific web browser 600 which can be used to handle data communication to and from the datasets 210 and/or 230. This browser can allow the user to surf the Internet while preserving her/his privacy. An optional indicator 610 can show whether navigation is secured or not (i.e. privacy-safe). Navigation can be secured by using one or more of techniques comprising: IP anonymization, proxies, Virtual Private Networks, onion routing, DNS spoofing, code obfuscation, handling of cookies (including LSO cookies) and other bugs, implementation of adblockers, handling of fingerprinting techniques, use of virtual machines, etc. At any time, the real user can switch identities 620. By touching or clicking the icon 620, the user can manage identities (e.g. edit, delete, fork, clone, etc). The user also can monitor and visualize the number of blocked trackers, ads, cookies etc. By touching or clicking the icon 630, the user can access detailed reports.

Figure 7 shows another example of a screen of the specific web browser. If and when prompted to fill-in a form 710, a contextual help 720 can be provided by displaying available identities: the user can choose a profile amongst a plurality 730 for auto-completion. In some embodiments, a recommendation can be made to use a particular profile given the risks associated to the form and/or the considered website. A new identity also can be created.

The subject matter of the present disclosure includes all novel and non-obvious combinations and sub-combinations of the various processes, systems and configurations, and other features, functions, acts, and/or properties disclosed herein, as well as any and all equivalents thereof. They do not in any way limit the scope of said invention which is defined by the appended claims.

## Claims

1. A computer-implemented method of handling personal data comprising the steps of:
- a program (220) associating data of a first dataset (210) with data of a second dataset (230), wherein the first dataset (210) comprises personal identifiable data and wherein the second dataset (230) does not comprise personal identifiable data ;
- receiving a request for data of the first and/or second datasets;
- determining in/by a program (220) communication modalities to said requested data;
- communicating requested data or parts thereof.

2. The computer-implemented method of Claim 1, wherein the first dataset (210) comprises true identity information.

3. The computer-implemented method of one of Claims 1 to 2, wherein the first dataset (210) comprises Know Your Customer compliant data.

4. The computer-implemented method of one of Claims 1 to 3, wherein the second dataset (230) comprises anonymous and/or anonymized and/or pseudonymized and/or de-identified data.

5. The computer-implemented method of one of Claims 1 to 4, wherein the second dataset (230) is partitioned into a plurality of datasets associated with discrete levels of privacy breach risks.

6. The computer-implemented method of one of Claims 1 to 5, wherein the partitioning between datasets and/or the logic implemented in the program (220) uses one or more mechanisms selected from a group comprising multi-party computation, homomorphic encryption, k-anonymity, I-diversity, Virtual Party Protocols, Secure Sum Protocols, differential privacy, exponential mechanism, Statistical Disclosure Control, double blind mechanism or quasi-identifiers.

7. The computer-implemented method of one of Claims 1 to 6, wherein the program (220) implements one or more of formal logic, computational logic, fuzzy logic or intuitionist logic.

8. The computer-implemented method of one of Claims 1 to 7, wherein the program is a smart contract.

9. The computer-implemented method of Claim 8, wherein the smart contract is instantiated in a distributed ledger.

10. The computer-implemented method of Claim 9, wherein the distributed ledger is a permissioned ledger.

11. The computer-implemented method of one of Claims 1 to 10, wherein the communication of requested data is conditional to a financial transaction.

12. The computer-implemented method of one of Claims 1 to 11, wherein data is sensor data.

13. The computer-implemented method of one of Claims 1 to 12, wherein data is secured by using one or more of symmetric encryption, asymmetric encryption, quantum key distribution, post-quantum encryption, and/or format-preserving encryption.

14. The computer-implemented method of one of Claims 1 to 13, wherein the second dataset (230) comprises GRDP compliant data, said GDRP data being associated with predefined rules with respect to disclosure consent, data breach monitoring, data deletion and data portability.

15. The computer-implemented method of one of Claims 1 to 14, wherein a request to access and/or to modify data of the first dataset (210) and/or the second dataset (230) is notified to one or more users associated with said data.

16. The computer-implemented method of one of Claims 1 to 15, wherein an access to and/or a modification of data of the first dataset (210) and/or the second dataset (230) is conditional to the acceptation by one or more users associated with said data.

17. The computer-implemented method of one of Claims 1 to 16, wherein the first dataset (210) and/or the second dataset (230) is downloadable by one or more users associated with said data and having sufficiently proved their true identity.

18. The computer-implemented method of one of Claims 1 to 17, wherein an access request and/or modification of data and/or read and/or rights associated with a piece of data of the first dataset (210) and/or the second dataset (230) is recorded in a metadata file, said metadata file being stored separately from said piece of data or being conveyed long said piece of data.

19. A computer program comprising instructions for carrying out the steps of the method of any preceding claim when said computer program is executed on a computer.

20. A system for handling personal data comprising a processor configured to:
- associate data of a first dataset (210) with data of other datasets, wherein the first dataset (210) comprises personal identifiable data and wherein the other datasets do not comprise said personal identifiable data ;
- receive a request for data of the first and/or other datasets;
- determine communication modalities to said requested data; and to
- communicate requested data or parts thereof.
